# EUROPÄISCHE PATENTSCHRIFT

(11) **EP 1 907 171 B1**
(45) Veröffentlichungstag und Bekanntmachung des Hinweises auf die Patenterteilung: **22.07.2009**
(21) Anmeldenummer: 06742848.2
(22) Anmeldetag: 09.05.2006
(51) Int. Cl.: B23Q 11/12, B23Q 1/01, F16C 29/04

(54) **LINEARFÜHRUNGSSCHIENE FÜR EIN LINEARFÜHRUNGSSYSTEM MIT KÜHLMITTELNUT**
LINEAR GUIDE RAIL FOR A LINEAR GUIDE SYSTEM PROVIDED WITH A COOLANT SLOT
RAIL DE GUIDAGE LINEAIRE POUR UN SYSTEME DE GUIDAGE LINEAIRE POURVU D'UNE RAINURE A FLUIDE DE REFROIDISSEMENT

(30) Priorität: 27.06.2005 DE 102005029854
(43) Veröffentlichungstag der Anmeldung: 09.04.2008
(73) Patentinhaber: P & L GmbH & Co. KG, 20148 Hamburg (DE)
(72) Erfinder: RÖDERS, Jürgen, 20148 Hamburg (DE)
(74) Vertreter: Weber, Joachim
(86) Internationale Anmeldenummer: PCT/EP2006/004341
(87) Internationale Veröffentlichungsnummer: WO 2007/000209

(56) Entgegenhaltungen:
- EP-A- 1 060 829
- GB-A- 1 063 904
- US-A- 5 373 635
- US-A- 5 431 497

## Beschreibung

Die Erfindung bezieht sich auf eine Linearführungschiene und ein Linearführungssystem gemäß dem Oberbegriff des Anspruchs 1 bzw. 3.

Im Einzelnen bezieht sich die Erfindung auf eine Linearführungsschiene mit einem mittels abrollender Elemente längs der Linearführungschiene bewegbaren Führungswagen, wobei die Linearführungsschiene an ihrer Oberseite mit Befestigungsausnehmungen versehen ist, um diese mittels Schrauben oder Ähnlichem mit einem Bauelement oder einer Baugruppe einer Werkzeugmaschine oder eines Bearbeitungszentrums oder Ähnlichem zu verbinden. Die Befestigungsausnehmungen sind mittels eines Abdeckbandes abgedeckt, um eine glatte Oberfläche zu schaffen und um das Eindringen von Spänen, Schmutz oder Kühlmittel in den Zwischenraum zwischen der Linearführungsschiene und dem Führungswagen zu verhindern.

In Werkzeugmaschinen werden häufig Führungssysteme mit Rollen oder Kugeln, so genannte Rollenschienenführungen oder Kugelschienenführungen eingesetzt. Die Führungen bestehen aus Führungsschienen und Führungswagen. Die Führungswagen können auf den Führungsschienen mit relativ wenig Kraft bei gleichzeitig hoher Steifigkeit hin und her verfahren werden. Die Führungsschienen werden an einem Bauteil, die Führungswagen an einem anderen Bauteil, z.B. einem Schlitten der Maschine, befestigt. Über einen geeigneten Antrieb, z.B. Kugelrollspindelantriebe oder Linearmotoren, wird eine Relativbewegung in Richtung der Führungsschienen zwischen den Bauteilen erzeugt. Auf diese Weise werden z.B. Zustellachsen in Werkzeugmaschinen aufgebaut.

Bei modernen Werkzeugmaschinen werden die Achsen häufig mit hohen Geschwindigkeiten verfahren. Da die Führungswagen aufgrund ihrer Vorspannung und eventuell vorhandener Dichtelemente nicht reibungsfrei sind, entsteht bei dem Verfahren der Führungswagen auf den Führungsschienen Wärme. Die Wärme erwärmt nicht nur die Führungsschienen und Führungswagen sondern über Wärmeleitung und Strahlung auch die daran befestigten Bauteile. Diese dehnen sich entsprechend ihren Wärmeausdehnungskoeffizienten aus. In der Folge verformt sich die Maschine. Es entstehen zusätzliche Ungenauigkeiten und Abweichungen bei der Bearbeitung, die unerwünscht sind.

Es ist bekannt, die Führungsschienen mit Abdeckbändern zu versehen. Diese Abdeckbänder decken die Schraubenköpfe zur Befestigung der Führungsschienen ab und dienen dazu, eine glatte Fläche auf den Führungsschienen für die Abstreifer an den Führungswagen zu schaffen, die ein Eintreten von Schmutz in die Führungswagen verhindern.

Die US-A-5 431 497 beschreibt ein Linearführungssystem mit einer Linearführungsschiene, welche in ihrem zentrischen Bereich über ihre gesamte Länge mit einer Bohrung versehen ist, durch welche ein Kühlmittel durchgeleitet wird. Eine derartige Bohrung ist zum einen nur mit sehr hohem Aufwand und bei relativ kurzen Linearführungsschienen herstellbar, zum anderen beeinträchtigt die Bohrung eine Befestigung der Linearführungsschiene mittels mittiger Befestigungsschrauben.

Aus der GB-A-1 063 904 ist ein Kühlsystem für eine Werkzeugmaschine, insbesondere eine Schleifmaschine, vorbekannt, welches als offenes System ausgebildet ist und einen Sprühkopf zur Zuführung der Kühlflüssigkeit sowie offene Ablaufrinnen vorsieht. Hierbei ist eine gezielte Steuerung der Durchströmung mit Kühlfluid nicht möglich.

Der Erfindung liegt die Aufgabe zugrunde, ein Linearführungssystem und eine zugehörige Linearführungsschiene zu schaffen, welche bei Vermeidung der aus dem Stand der Technik bekannten Nachteile eine Temperaturregelung ermöglichen.

Erfindungsgemäß wird die Aufgabe durch die Merkmalskombination des Anspruchs 1 oder 3 sowie der nebengeordneten Ansprüche gelöst, die Unteransprüche zeigen jeweils vorteilhafte weitere Ausgestaltungen der Erfindung.

Erfindungsgemäß ist somit vorgesehen, dass im Bereich der Linearführungsschiene zumindest eine, sich über einen Teil der Länge der Linearführungsschiene erstreckende Kühlmittelnut ausgebildet ist. Mittels der Kühlmittelnut kann somit ein Kühlmittel so durchgeleitet werden, dass dieses in optimaler Weise die Linearführungsschiene kühlt. Dabei ergeben sich unterschiedliche Ausgestaltungsvarianten, die nachfolgend beschrieben werden. Die Kühlmittelnut kann an der Oberseite oder der Unterseite der Linearführungsschiene ausgebildet sein, es ist auch möglich, die Kühlmittelnut in einem Bauteil, beispielsweise einem Maschinenbett auszubilden und somit eine aus dem Stand der Technik bekannte Linearführungsschiene zu verwenden. In all diesen Fällen ist eine optimale Kühlung gewährleistet, welche Längenänderungen durch Erwärmung vermeidet.

Durch geeignete Mittel ist es möglich, die Durchströmung des Kühlmittels linear oder turbulent zu gestalten, um eine optimale Wärmeabfuhr zu gewährleisten.

Die Erfindung zeichnet sich durch eine Reihe erheblicher Vorteile aus.

Durch die Kühlmittelnut ist es möglich, die Linearführungsschiene direkt zu kühlen und deren Temperatur zu regeln. Hierdurch werden die aus dem Stand der Technik bekannten Nachteile vermieden. Es ist möglich, jegliche Formänderung der Linearführungsschiene sowie des Linearführungssystems, welche durch Temperaturänderungen bedingt ist, zu eliminieren.

Die Erfindung schafft somit eine sehr einfache Lösung zur Temperierung der Führungsschienen, bei der die Erwärmung minimiert wird.

Gemäß der Erfindung werden die Führungsschienen so ausgebildet, dass diese oben eine eckige, runde oder anders geformte Kühlmittelnut in Längsrichtung aufweisen. Die Kühlmittelnut verbindet somit die Befestigungsausnehmungen oder Einsenkungen für die Schrauben zur Befestigung der Führungsschienen. Wenn das Abdeckband auf die Schienen gebracht wird, entsteht ein geschlossener Hohlraum entlang der Führungsschiene, wenn die Schraubenköpfe zur Befestigung der Schiene ausreichend tief sitzen. Der nutförmige Querschnitt wechselt sich ab mit den Befestigungsausnehmungen oder Einsenkungen und den darin befindlichen Schrauben. Dieser Hohlraum wird erfindungsgemäß genutzt, um eine geeignete Kühlflüssigkeit, beispielsweise Wasser, hindurchzuleiten und so die Führungsschiene zu temperieren und eventuell entstehende Wärme aus der Verfahrbewegung der Führungswagen abzuführen.

In einer alternativen Ausgestaltungsvariante kann die Kühlmittelnut an der Unterseite der Linearführungsschiene vorgesehen sein. Diese Ausgestaltung eignet sich insbesondere für Linearführungsschienen, bei welchen kein oberes Abdeckband vorgesehen ist und beispielsweise die Schraubenöffnungen mittels Stopfen oder Ähnlichem verschlossen werden.

Alternativ hierzu ist es auch möglich, die Kühlmittelnut direkt in dem Bauteil auszubilden, an welchem die Linearführungsschiene montiert ist. Auch hierbei können Ausbuchtungen oder Ausnehmungen im Bereich der Befestigungsschrauben möglich sein, um deren Umströmung zu optimieren.

Es ist erfindungsgemäß ein geeigneter Schlauch- oder Rohranschluss, z.B. durch eine Verschraubung im Abdeckblech am Anfang und am Ende der Führungsschiene vorteilhaft. Der Querschnitt des Hohlraums kann relativ klein sein, da die durch das Verfahren der Achsen entstehende Wärme auch relativ gering ist. Außerdem ist es sehr vorteilhaft, dass sich der nutförmige Querschnitt des Hohlraumes mit den Einsenkungen für die Schrauben in kurzen Abständen abwechselt. Das führt zu Verwirbelungen in der Kühlflüssigkeit und damit besserer Temperierung der Führungsschiene.

Der Durchfluss kann kontinuierlich oder getaktet oder anders gesteuert entsprechend den Anforderungen der Bearbeitung erfolgen.

Um eventuelle Leckagen zu vermeiden, kann es vorteilhaft sein, die Kühlflüssigkeit mit Unterdruck durch die Führungsschienen zu saugen. Kleine Leckagen führen dann nicht zu einem Austreten der Flüssigkeit und müssen nicht aufwendig abgedichtet werden. An den Leckagen wird dann etwas Umgebungsluft mit angesaugt, die in kleinen Mengen aber nicht weiter störend ist. Außerdem besteht nicht die Gefahr des Abhebens des Abdeckbandes, sondern das Abdeckband wird zusätzlich durch den Unterdruck an die Führungsschiene angedrückt.

Alternativ ist es erfindungsgemäß möglich, die Kühlflüssigkeit auch mit Überdruck durch den Hohlraum in den Führungsschienen zu drücken, wenn dafür gesorgt wird, dass das Abdeckband ausreichend fest ist und keine Leckagen vorhanden sind.

Ein großer Vorteil der Erfindung besteht darin, dass die Wärme direkt am Entstehungsort abgeführt wird. Alternativ mögliche Bohrungen für Kühlflüssigkeit in den an den Führungen oder Führungswagen befestigten Bauteilen könnten die Wärme nur durch Wärmeleitung abführen und sind daher weniger effizient.

Im Nachfolgenden wird die Erfindung anhand eines Ausführungsbeispiels in Verbindung mit der Zeichnung beschrieben.

### Dabei zeigt:

- Fig. 1: eine Teil-Längs-Schnittansicht eines ersten Ausführungsbeispiels einer erfindungsgemäßen Linearführungsschiene,
- Fig. 2: eine perspektivische Darstellung der Linearführungsschiene ohne Abdeckband,
- Fig. 3: eine Schnittansicht, quer zur Längsachse, des in den Fig. 1 und 2 gezeigten Ausführungsbeispiels,
- Fig. 4: eine Schnittansicht, analog Fig. 1, eines weiteren Ausführungsbeispiels,
- Fig. 5 und 6: Schnittansichten, analog Fig. 3, des in Fig. 1 gezeigten Ausführungsbeispiels,
- Fig. 7a und 7b: eine perspektivische Ansicht der Linearführungsschiene in Oberansicht und Unteransicht,

- Fig. 8: eine Längs-Schnittansicht, analog den Fig. 1 und 4, eines weiteren Ausführungsbeispiels,
- Fig. 9 und 10: Quer-Schnittansichten, analog den Darstellungen der Fig. 5 und 6, und
- Fig. 11: eine perspektivische Ansicht der in den Fig. 8 bis 10 dargestellten Linearführungsschiene.

Bei den nachfolgenden Ausführungsbeispielen werden gleiche Teile jeweils mit gleichen Bezugsziffern versehen.

Die erfindungsgemäße Linearführungsschiene 1 gemäß dem ersten Ausführungsbeispiel ist mit Befestigungsausnehmungen 3 versehen, um diese mittels Schrauben 7 an einem Bauteil 8 zu befestigen. Die Befestigungsausnehmungen sind abgestuft, damit der Kopf der Schraube entsprechend versenkt untergebracht werden kann. Die Anzahl der Schrauben sowie deren Größe ist ebenso von den konstruktiven Gegebenheiten abhängig, wie die Ausgestaltung und Dimensionierung der Linearführungsschiene selbst.

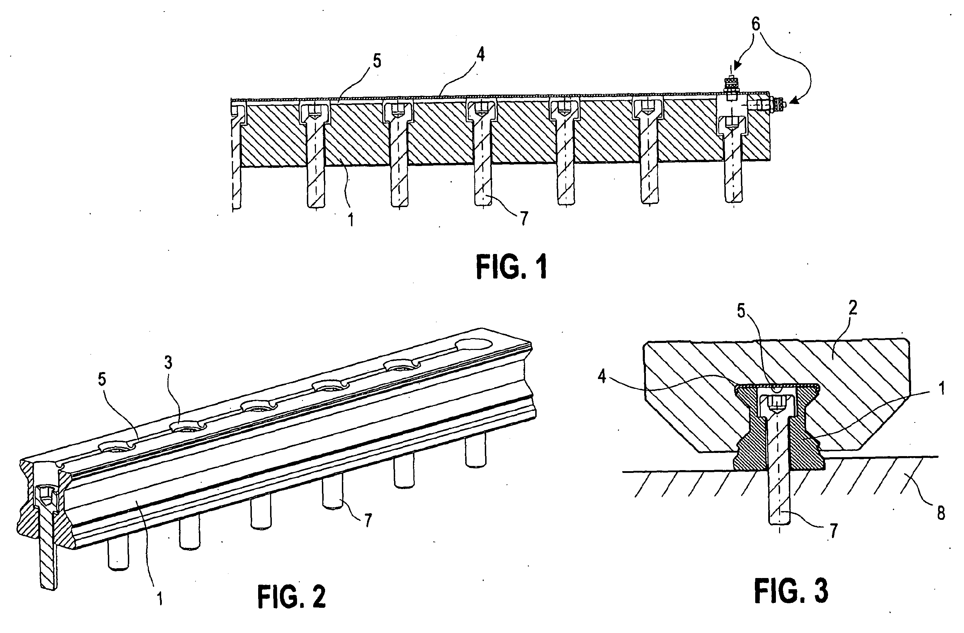

Die Linearführungsschiene 1 ist mit einem Abdeckband 4 versehen, welches eine plane Oberfläche schafft und die Befestigungsausnehmungen 3 abdeckt, so dass kein Schmutz, keine Späne oder Ähnliches in den Zwischenraum zwischen der Linearführungsschiene und einem auf dieser linear bewegbaren Führungswagen 2 (siehe Fig. 3) eindringen kann. Insbesondere in der Darstellung der Fig. 3 wurde darauf verzichtet, die Wälzkörper (Kugeln, Rollen oder Ähnliches) darzustellen, da diese aus dem Stand der Technik bekannt sind. Gleiches gilt für weitere konstruktive Ausgestaltungen sowohl des Führungswagens als auch der Linearführungsschiene.

Erfindungsgemäß ist an der Oberseite der Linearführungsschiene eine Kühlmittelnut 5 vorgesehen, welche sich über deren Länge erstreckt und dabei die Befestigungsausnehmungen 3 verbindet.
Kühlmittel kann mittels Kühlmittelanschlüssen 6, die entweder an der Oberseite oder an der Stirnseite der Linearführungsschiene angebracht sein können, zugeführt bzw. abgeführt werden.. Bei dem in Fig. 1 gezeigten Ausführungsbeispiel ist beispielsweise die rechte Schraube 7 tiefer versenkt, um Raum für den Anschluss des Kühlmittelanschlusses 6 zu gewinnen.

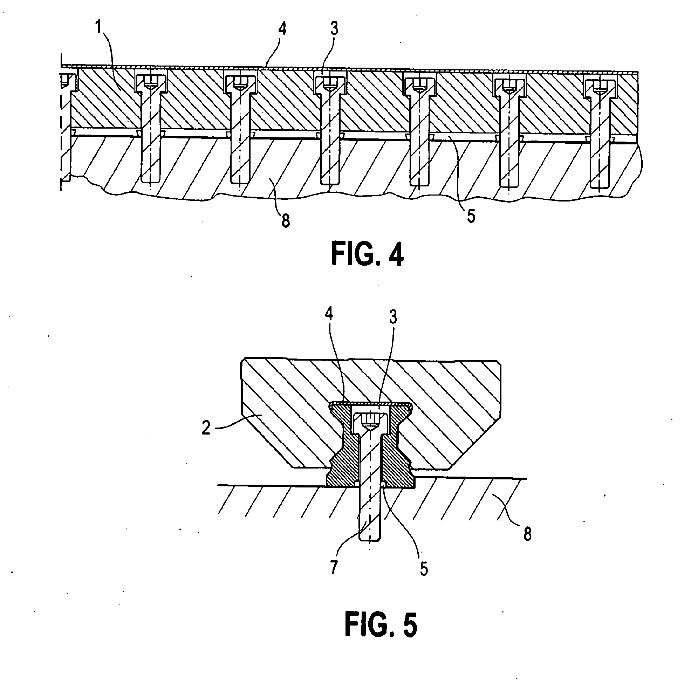

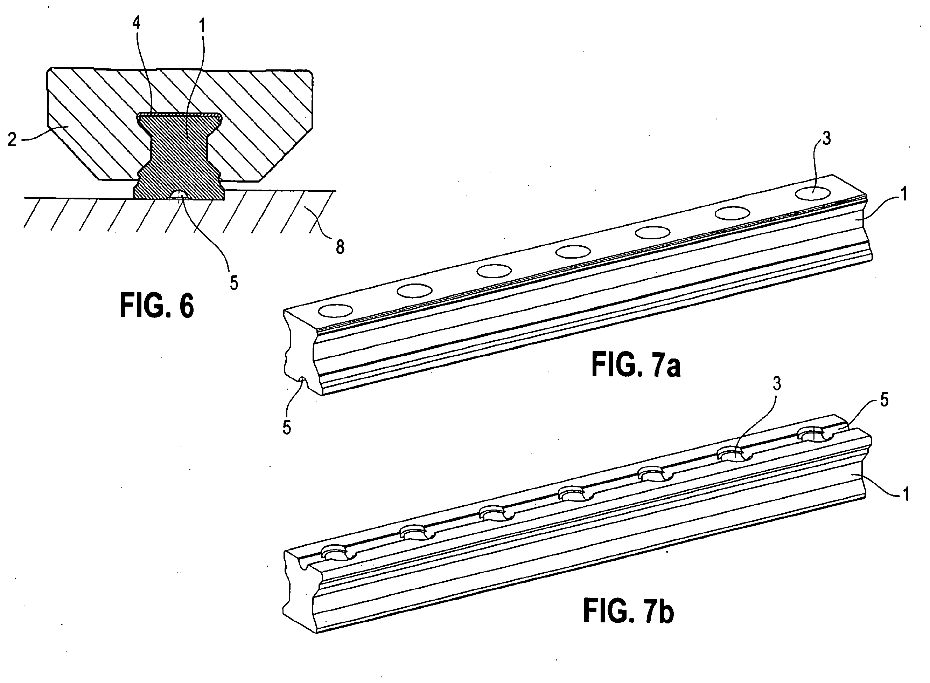

Bei dem Ausführungsbeispiel der Fig. 4 bis 7 ist die Kühlmittelnut 5 im unteren Bereich der Linearführungsschiene 1, d.h., an ihrer Unterseite, ausgebildet. Die Dimensionierung und Breite der Kühlmittelnut 5 ist dabei an die Anforderungen anpassbar. Der Querschnitt kann beispielsweise im Bereich der Schrauben 7 vergrößert sein, so wie dies die Fig. 5 zeigt. Der übrige Querschnitt kann halbkreisförmig oder rechteckig ausgebildet sein. Fig. 7a zeigt eine perspektivische Ansicht der Linearführungsschiene 1 in Oberansicht, während Fig. 7b eine Unteransicht dieser Linearführungsschiene zeigt.

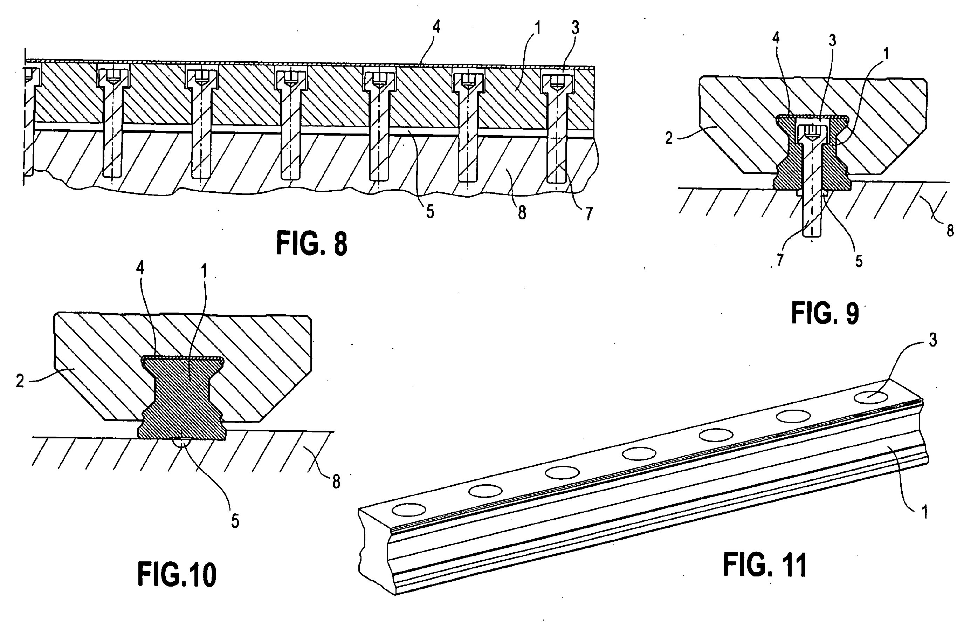

Die Fig. 8 bis 11 zeigen ein weiteres Ausführungsbeispiel in analoger Darstellung der Fig. 4 bis 7. Bei diesem Ausführungsbeispiel ist die Kühlmittelnut 5 in dem Bauteil 8 ausgebildet, auf welches die Linearführungsschiene 1 aufgeschraubt bzw. an welchem diese befestigt ist. Die Linearführungsschiene 1 braucht damit gegenüber dem Stand der Technik nicht wesentlich verändert werden. Auch hierbei versteht sich, dass im Bereich der Schrauben 7 die Kühlmittelnut 5 einen größeren Querschnitt aufweisen sollte, um die Umströmung zu optimieren.

Die Erfindung ist nicht auf die gezeigten Ausführungsbeispiele beschränkt, vielmehr ist es im Rahmen der Erfindung insbesondere möglich, mehrere der oben genannten Varianten zu kombinieren und somit beispielsweise an einer Linearführungsschiene 1 mehrere Kühlmittelnuten vorzusehen.

### Bezugszeichenliste

- 1: Linearführungsschiene
- 2: Führungswagen
- 3: Befestigungsausnehmung
- 4: Abdeckband
- 5: Kühlmittelnut
- 6: Kühlmittelanschluss
- 7: Schraube
- 8: Bauteil

## Patentansprüche

1. Linearführungsschiene für ein Linearführungssystem mit zumindest einem mittels abrollender Elemente längs der Linearführungsschiene (1) bewegbaren Führungswagen (2), **dadurch gekennzeichnet, dass** im Bereich der Linearführungsschiene (1) zumindest eine sich über zumindest einen Teil der Länge der Linearführungsschiene (1) erstreckende Kühlmittelnut (5) ausgebildet ist, wobei Kühlmittelanschlüsse (6) zur Einleitung und Ableitung von Kühlmittel in die und aus der Kühlmittelnut (5) vorgesehen sind, wobei die Linearführungsschiene (1) an ihrer Oberseite mit Befestigungsausnehmungen (3) versehen ist, welche mittels eines Abdeckbandes (4) abgedeckt sind und an ihrem oberem Bereich, abgedeckt durch das Abdeckband (4), mit der Kühlmittelnut (5) versehen ist.

2. Linearführungsschiene nach Anspruch 1, **dadurch gekennzeichnet, dass** die Kühlmittelnut (5) die Befestigungsausnehmungen (3) durchgreift.

3. Linearführungssystem mit zumindest einem mittels abrollender Elemente längs einer Linearführungsschiene (1) bewegbaren Führungswagen (2), wobei die Linearführungsschiene (1) an einem Bauteil (8) befestigt ist, **dadurch gekennzeichnet, dass** im Bereich der Linearführungsschiene (1) zumindest eine sich über zumindest einen Teil der Länge der Linearführungsschiene (1) erstreckende Kühlmittelnut (5) ausgebildet ist, wobei Kühlmittelanschlüsse (6) zur Einleitung und Ableitung von Kühlmittel in die und aus der Kühlmittelnut (5) vorgesehen sind, wobei die Kühlmittelnut (5) im montierten Zustand der Linearführungsschiene (1) an dem Bauteil (8) abgedeckt ist.

4. Linearführungssystem nach Anspruch 3, **dadurch gekennzeichnet, dass** die Kühlmittelnut (5) in der Oberfläche eines Bauteils (8) einer Werkzeugmaschine ausgebildet ist.

5. Linearführungssystem nach Anspruch 3, **dadurch gekennzeichnet, dass** die Kühlmittelnut (5) in der Unterseite der Linearführungsschiene (1) ausgebildet ist.

6. Linearführungssystem nach einem der Ansprüche 1 bis 5, **dadurch gekennzeichnet, dass** die Kühlmittelnut (5) sich über die gesamte Länge der Linearführungsschiene (1) erstreckt.

7. Linearführungssystem nach einem der Ansprüche 1 bis 6, **dadurch gekennzeichnet, dass** die Kühlmittelnut (5) zur Durchführung von Kühlmittel mit Unterdruck ausgebildet ist.

8. Linearführungssystem nach einem der Ansprüche 1 bis 6, **dadurch gekennzeichnet, dass** die Kühlmittelnut (5) zur Durchführung von Kühlmittel mit Überdruck ausgebildet ist.

9. Linearführungssystem mit zumindest einem mittels abrollender Elemente längs einer Linearführungsschiene bewegbaren Führungswagen (2), mit mindestens einer Linearführungsschiene (1) nach einem der Ansprüche 1 oder 2.

10. Verfahren zum Betrieb eines Linearführungssystems nach Anspruch 9 oder einem der Ansprüche 3 bis 8, bei welchem ein Kühlmittel kontinuierlich durch die Kühlmittelnut (5) geleitet wird.

11. Verfahren zum Betrieb eines Linearführungssystems nach Anspruch 9 oder einem der Ansprüche 3 bis 8, bei welchem ein Kühlmittel diskontinuierlich durch die Kühlmittelnut (5) geleitet wird.

## Claims

1. Linear guide rail for a linear guide system having at least one guide carriage (2) that can be moved along the linear guide rail (1) by means of rolling elements, **characterized in that**, in the region of the linear guide rail (1) there is formed at least one coolant groove (5) extending over at least part of the length of the linear guide rail (1), coolant connections (6) for leading coolant into and out of the coolant groove (5) being provided, the linear guide rail (1) being provided on its top side with fixing recesses (3), which are covered by means of a cover strip (4) and, in the upper region, covered by the cover strip (4), being provided with the coolant groove (5).

2. Linear guide rail according to Claim 1, **characterized in that** the coolant groove (5) passes through the fixing recesses (3).

3. Linear guide system having at least one guide carriage (2) that can be moved along a linear guide rail (1) by means of rolling elements, the linear guide rail (1) being fixed to a component (8), **characterized in that**, in the region of the linear guide rail (1) there is formed at least one coolant groove (5) extending over at least part of the length of the linear guide rail (1), coolant connections (6) for leading coolant into and out of the coolant groove (5) being provided, the coolant groove (5) being covered when the linear guide rail (1) is mounted on the component (8).

4. Linear guide system according to Claim 3, **characterized in that** the coolant groove (5) is formed in the surface of a component (8) of a machine tool.

5. Linear guide system according to Claim 3, **characterized in that** the coolant groove (5) is formed in the underside of the linear guide rail (1).

6. Linear guide system according to one of Claims 1 to 5, **characterized in that** the coolant groove (5) extends over the entire length of the linear guide rail (1).

7. Linear guide system according to one of Claims 1 to 6, **characterized in that** the coolant groove (5) is designed for coolant to be led through under negative pressure.

8. Linear guide system according to one of Claims 1 to 6, **characterized in that** the coolant groove (5) is designed for coolant to be led through under positive pressure.

9. Linear guide system having at least one guide carriage (2) that can be moved along a linear guide rail by means of rolling elements, having at least one linear guide rail (1) according to either of Claims 1 and 2.

10. Method for operating a linear guide system according to Claim 9 or one of Claims 3 to 8, in which a coolant is led continuously through the coolant groove (5).

11. Method for operating a linear guide system according to Claim 9 or one of Claims 3 to 8, in which a coolant is led discontinuously through the coolant groove (5).

## Revendications

1. Rail de guidage linéaire pour un système de guidage linéaire avec au moins un chariot de guidage (2) mobile le long du rail de guidage linéaire (1) par l'intermédiaire d'éléments roulants, **caractérisé en ce qu'**au niveau du rail de guidage linéaire (1) est formée une rainure (5) pour fluide de refroidissement s'étendant sur au moins une partie de la longueur du rail de guidage linéaire (1), des raccords (6) pour fluide de refroidissement étant prévus pour introduire et évacuer du fluide de refroidissement dans et depuis la rainure (5) pour fluide de refroidissement, le rail de guidage linéaire (1) étant muni sur sa face supérieure d'évidements de fixation (3) qui sont recouverts par une bande de recouvrement (4) et sont munis de la rainure (5) pour fluide de refroidissement dans leur partie supérieure, de manière recouverte par la bande de couverture (4).

2. Rail de guidage linéaire selon la revendication 1, **caractérisé en ce que** la rainure (5) pour fluide de refroidissement traverse les évidements de fixation (3).

3. Système de guidage linéaire avec au moins un chariot de guidage (2) mobile le long d'un rail de guidage linéaire (1) par l'intermédiaire d'éléments roulants, le rail de guidage linéaire (1) étant fixé à un composant (8), **caractérisé en ce qu'**au niveau du rail de guidage linéaire (1) est formée une rainure (5) pour fluide de refroidissement s'étendant sur au moins une partie de la longueur du rail de guidage linéaire (1), des raccords (6) pour fluide de refroidissement étant prévus pour introduire et évacuer du fluide de refroidissement dans et depuis la rainure (5) pour fluide de refroidissement, la rainure (5) pour fluide de refroidissement étant recouverte à l'état monté du rail de guidage linéaire (1) sur le composant (8).

4. Système de guidage linéaire selon la revendication 3, **caractérisé en ce que** la rainure (5) pour fluide de refroidissement est formée dans la surface d'un composant (8) d'une machine-outil.

5. Système de guidage linéaire selon la revendication 3, **caractérisé en ce que** la rainure (5) pour fluide de refroidissement est réalisée dans la face inférieure du rail de guidage linéaire (1).

6. Système de guidage linéaire selon l'une des revendications 1 à 5, **caractérisé en ce que** la rainure (5) pour fluide de refroidissement s'étend sur toute la longueur du rail de guidage linéaire (1).

7. Système de guidage linéaire selon l'une des revendications 1 à 6, **caractérisé en ce que** la rainure (5) pour fluide de refroidissement est conformée pour acheminer du fluide de refroidissement sous pression négative.

8. Système de guidage linéaire selon l'une des revendications 1 à 6, **caractérisé en ce que** la rainure (5) pour fluide de refroidissement est conformée pour acheminer du fluide de refroidissement sous pression positive.

9. Système de guidage linéaire avec au moins un chariot de guidage (2) mobile le long d'un rail de guidage linéaire par l'intermédiaire d'éléments roulants, avec au moins un rail de guidage linéaire (1) selon l'une des revendications 1 ou 2.

10. Procédé de fonctionnement d'un système de guidage linéaire selon la revendication 9 ou l'une des revendications 3 à 8, dans lequel un fluide de refroidissement est envoyé de manière continue à travers la rainure (5) pour fluide de refroidissement.

11. Procédé de fonctionnement d'un système de guidage linéaire selon la revendication 9 ou l'une des revendications 3 à 8, dans lequel un fluide de refroidissement est envoyé de manière discontinue à travers la rainure (5) pour fluide de refroidissement.
